# EUROPEAN PATENT APPLICATION

(11) **EP 4 811 022 A1**
(43) Date of publication of application: **23.09.2026**
(21) Application number: 25165388.7
(22) Date of filing: 21.03.2025
(51) Int. Cl.: G02F 1/01, G01B 9/02056, G02B 6/28, G02F 1/21, G02F 1/225, H04J 14/00

(54) **METHOD, COMPUTER PROGRAM, APPARATUS, SYSTEM**

(71) Applicant: Deutsche Telekom AG, 53113 Bonn (DE); Technische Universität München, 80333 München (DE)
(72) Inventor: NÖTZEL, Janis, 81829 München (DE); MUNAR VALLESPIR, Pere, 80336 München (DE); GEITZ, Marc, 58089 Hagen (DE)
(74) Representative: 2SPL Patentanwälte PartG mbB

(57) **Abstract**

Provided is a method for detecting presence of coherent light using a photonic processor. The method includes receiving data indicating, for an output of the photonic processor, a characteristic of the coherent light, the coherent light entering the photonic processor at at least two inputs. The method further includes generating a control signal for adjusting at least one parameter relating to the photonic processor such that the coherent light of the at least two inputs interferes in a way to increase the characteristic at the output. The method further includes determining the presence of the coherent light based on an analysis of the increased characteristic at the output.

## Description

### Field

The present disclosure relates to a method, a computer program, an apparatus, and a system for detecting coherent light even at very low intensities using a photonic processor.

### Background

Photonic processing may relate to a type of computing in which, instead of electric signals, light signals (i.e., photons) may be used. A photonic processor may relate to a type of computing device that uses light instead of electrons to perform data processing. By leveraging the speed and bandwidth of light, photonic processors may be able to process information faster than traditional electronic processors, potentially enabling more efficient and faster computations. Photonic processors may use optical components such as lasers, waveguides, photodetectors, interferometers, beam splitters, phase-shifters, and the like, to manipulate and transmit data. Photonic processors may especially be suitable for tasks requiring massive data transmission, like in telecommunications and high-performance computing. Also, it may be possible to reduce energy consumption compared to electronic processors, making them an attractive solution for future computing technologies.

There may be a demand for improved uses of photonic processors.

### Summary

This demand may be satisfied by the subject-matter of the independent claims. Further aspects are set forth in the dependent claims, the drawings, and the following description.

According to a first aspect, the disclosure provides a method for detecting presence of coherent light using a photonic processor. The method includes receiving data indicating, for an output of the photonic processor, a characteristic of the coherent light, the coherent light entering the photonic processor at at least two inputs. The method further includes generating a control signal for adjusting at least one parameter relating to the photonic processor such that the coherent light of the at least two inputs interferes in a way to increase the characteristic at the output. The method further includes determining the presence of the coherent light based on an analysis of the increased characteristic at the output.

Thereby, sensing of coherent light from a correlated light source may be provided for very low energies (e.g., single photons).

In some examples, the interfering at the output is further caused by routing, using at least one beamsplitter and at least one phase-shifter, the coherent light of the at least two inputs to the output.

Thereby, the signals from the at least two inputs may be used for further enhancing sensing efficiency.

In some examples, the characteristic includes at least one of an amplitude, an intensity, a power, a photon number, and an interference measure.

Thereby, sensing may be further enhanced.

In some examples, the output is a first output, and the at least two inputs are at least two first inputs. In such examples, the method further includes receiving data indicating, for a second output of the photonic processor, the characteristic of the coherent light, the coherent light entering the photonic processor at at least two second inputs. In such examples, the method further includes generating a control signal for adjusting at least one further parameter relating to the photonic processor such that the coherent light of the at least two second inputs interfere in a way to increase the characteristic at the second output. In such examples, the method further includes, when the characteristic at the second output is increased to a predetermined value, generating a control signal for adjusting at least one further parameter relating to the photonic processor such that the coherent light entering the photonic processor at the at least two further inputs are rerouted to the first output for further increasing the characteristic at the first output.

Thereby, sensing efficiency may be further enhanced by using more signals.

In some examples, the method further includes, when the characteristic at the second output is increased to the predetermined value, generating a control signal for adjusting at least one further parameter relating to the photonic processor such that the coherent light of the at least two first inputs and the coherent light of the at least two second inputs interfere in a way to increase the characteristic at the first output.

Thereby, the interference at the output may be further increased, thereby further increasing efficiency.

In some examples, the analysis of the increased characteristic comprises determining whether the characteristic follows a predetermined statistical distribution.

Thereby, a quantum physics description of the process may be utilized to yield a more efficient sensing.

In some examples, the analysis is based on at least one of a determination of an empirical distribution of the characteristic, a maximum likelihood decision, and a sequential hypothesis testing.

Thereby, different analysis methods may be provided.

In some examples, the coherent light is based on one of radio waves and thermal radiation waves.

Thus, different applications of the principles of the present disclosure may be provided.

According to a second aspect, the disclosure provides a computer program including instructions which, when the program is carried out on a computer or processing circuitry, causes the computer to carry out the method of the first aspect or any example relating to the first aspect.

According to a third aspect, the disclosure provides a non-transitory machine-readable medium including instructions which, when carried out on processing circuitry, cause the computer to carry out the method of the first aspect or any example relating to the first aspect.

According to a fourth aspect, the disclosure provides an apparatus for detecting presence of coherent light using a photonic processor, the apparatus including processing circuitry configured to carry out the method of the first aspect or any example relating to the first aspect.

According to a fifth aspect, the disclosure provides a system for detecting presence of coherent light using a photonic processor. The system includes an apparatus according to the fourth aspect. The system further includes a photonic processor. The photonic processor includes a plurality of photonic fibers for routing the coherent light from respective inputs to respective outputs. The photonic processor further includes at least one photon detector at the output for detecting the characteristic. The photonic processor further includes at least one adjustable phase-shifter for adjusting the phase according to a predetermined logic. The photonic processor further includes at least one beamsplitter for routing the coherent light of the at least two inputs onto the output.

In some examples, the system further includes a transmission antenna configured to emit the coherent light. In such examples, the coherent light is a reflection of the emitted coherent light (that may be weakened due to the reflection).

Thereby, different applications may be possible, such as active satellite telemetry, spy detection, air surveillance, or the like.

In some examples, the target is a further antenna that is excited by the coherent light, and the detection of the presence of the coherent light corresponds to a detection of presence of the further antenna.

For example, in satellite telemetry, antennas on the earth (radio antennas, base stations, mobile devices, car antennas, or the like) may be detected. Moreover, a hidden antenna may be detected in a room in the case of spy detection.

In some examples, the system further includes at least one satellite.

Thereby, active or passive satellite telemetry may be provided.

In some examples, the system further includes at least one radio telescope.

Thereby, astronomy applications may be provided.

### Brief description of the Figures

Some examples of apparatuses and/or methods will be described in the following by way of example only, and with reference to the accompanying figures, in which
Fig. 1 depicts a flowchart of a method according to the present disclosure;
Fig. 2 depicts type two error exponents when deciding between the hypothesis of correlated coherent light and uncorrelated coherent light according to the present disclosure;
Figs. 3 to 5 depict a calibration process of a photonic processor according to the present disclosure;
Fig. 6 depicts a block diagram of an apparatus according to the present disclosure;
Fig. 7 depicts a system according to the present disclosure;
Fig. 8 depicts an application of a system according to the present disclosure for spy detection;
Fig. 9 depicts an application of a system according to the present disclosure for satellite telemetry; and
Fig. 10 depicts an application of a system according to the present disclosure for radio teles-copy.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

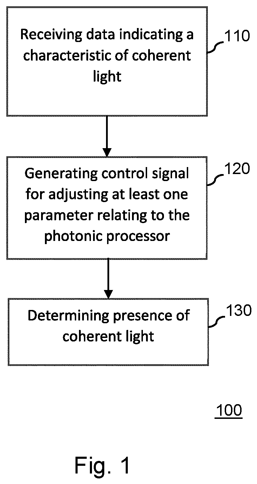

Fig. 1 depicts a method 100 for detecting presence of coherent light using a photonic processor.

There may be a "classical" way (using the ways of classical physics) to implement and describe the present disclosure and a quantum mechanical way. This may depend on the amount of light that is present and that should be detected. In particular, the effects of the present disclosure may already be achieved at very low light intensity, such that quantum mechanical effects may play a role and such that a quantum mechanical description may be useful since different detection methods (or data evaluation methods) may be used.

Accordingly, a non-quantum mechanical description of coherent light may include the description of an electromagnetic wave in which the phase difference between any two points remains constant over time, allowing for predictable interference patterns. It may be distinguished between temporal coherence and spatial coherence. In temporal coherence, the wave may exhibit a well-defined frequency and a long coherence time, meaning that the phase of the wave remains correlated over a certain period of time. On the other hand, in spatial coherence, the light may maintain a fixed phase relationship across different points in a beam, leading to high beam quality and diffraction-limited propagation. For example, a laser source may produce highly coherent light by stimulated emission, ensuring a uniform phase across the wavefront.

From a quantum mechanical perspective, coherent light may correspond to a coherent state. For example, emission of one or multiple (correlated) qubits or a light field from a source towards a number K of detectors may be described by a total received state of: ${ρ}_{E}^{\left(K\right)} = \frac{1}{π ⋅ E} \int {e}^{- {\left|α\right|}^{2} / E} {\left|\left.α\right〉\left〈α\right.\right|}^{⊗ K} dα$ with |α〉〈α| being the coherent states and *K * E* being the total received energy. Such a total received state may correspond to a field of classical coherent light. Hence, the present disclosure may describe the application of quantum methods to the sensing of specific properties of classical fields. Since a quantum mechanical description is used, very low total energies/intensities may be detected with a quantum advantage. Such a quantum detection method according to the present disclosure may be asymptotic superior compared to a purely classical detection, especially for very low energies/intensities.

For determining whether (at least) two states are correlated (and thus, coherent light is present), a quantum hypothesis test for two states ρ and σ may be carried for an ε>0. The probability of detecting the presence of the coherent light may by be assumed to be (at least) 1-ε. In such a case, the probability of falsely accepting the hypothesis of uncorrelated (or non-coherent) light may, for a large number of emissions from the same source, be asymptotically quantified by the error exponent: ${D}_{Q} \left(ρ, σ\right) : = {lim}_{n \to ∞} \frac{1}{n} log {β}_{n , ϵ} \left(ρ, σ\right)$ where ${β}_{n , ϵ} \left(ρ, σ\right) : = \left({min}_{0 \leq P \leq {1}^{⊗ n}}\left\{tr {Pσ}^{⊗ n}:tr {Pρ}^{⊗ n}\geq 1-ϵ\right\}\right)$ is the two-type error.

In other words, the error exponent may indicate the probability that presence of uncorrelated (non-coherent) light is determined although correlated (coherent) light is present. If a correlated light source emits a large number of photons, uncorrelated light may be falsely determined since it might not be possible to clearly distinguish between coherent and non-coherent light at large energies. Thus, the principles of present disclosure may be specifically applicable to small amounts of emissions (or small emitted energies) of the correlated light source(s). Thus, as mentioned above, the quantum advantage may arise as long as a quantum mechanical description is sensible, e.g., for single photons, for quenched light, or the like. For example, when light at 1550 nm is observed, and individual emissions from the sources last one nanosecond (1 ns) while the observed power per received mode is one nano Watt (1 nW), the number of photons per received mode and time slot may be in the order of 1/100. In such an example, the present disclosure may provide quantum advantage in the order of a factor of ten in the error exponent when the number of modes is set to 3.

The goal may be to distinguish between the hypothesis $ρ = {ρ}_{E}^{\left(K\right)}$ (correlated case) and *σ* = ${ρ}_{E}^{⊗ K}$ (uncorrelated case) with ⊗ being the tensor product. To show the quantum advantage mentioned above, it may suffice to show that ${D}_{Q} \left({ρ}_{E}^{\left(K\right)}, {ρ}_{E}^{⊗ K}\right)$ is lower bound by a large enough quantity. According to the present disclosure, this lower bound may be greater than for the case using a completely classical approach.

For example, the detectors K may perform a heterodyne or a homodyne detection (or in another example, a single photon detection, as discussed herein), based on which a multi-variate normal distributed random variable may be obtained. The random variable for the correlated case may be denoted ${p}_{E}^{\left(K\right)}$ and, for the heterodyne detection, may be given by ${p}_{E}^{\left(K\right)} \left({x}^{k}\right) = \frac{1}{{π}^{k + 1} E} \int {e}^{- \frac{{\left|α\right|}^{2}}{E}} {e}^{- {\sum }_{i = 1}^{K} {\left|α-{x}_{i}\right|}^{2}} dα$ and for the homodyne detection by ${{p}^{˜}}_{E}^{\left(K\right)} \left({x}^{k}\right) = \frac{1}{{π}^{k + 1} E} \int {e}^{- \frac{{\left|α\right|}^{2}}{E}} {e}^{- {\sum }_{i} {\left|\sqrt{2}ℜ\left(α\right)-{x}_{i}\right|}^{2}} dα$

The uncorrelated case may be denoted as ${p}_{E}^{⊗ K}$ (heterodyne case) or ${{p}^{˜}}_{E}^{⊗ K}$, such that the error exponent may be bounded by the following conditions: ${D}_{Q} \left({ρ}_{E}^{\left(K\right)}, {ρ}_{E}^{⊗ K}\right) \geq K ⋅ g \left(E\right) - f \left(1+2⋅K⋅E\right)$ $D \left({p}_{E}^{\left(K\right)}\left‖{p}_{E}^{⊗ K}\right.\right) = log \frac{{\left(1+E\right)}^{K}}{\left(1+K⋅E\right)}$ $D \left({{p}^{˜}}_{E}^{\left(K\right)}\left‖{{p}^{˜}}_{E}^{⊗ K}\right.\right) = \frac{1}{2} log \frac{{\left(1+2E\right)}^{K}}{\left(1+2K⋅E\right)}$ **where g is** the Gordon function defined by *g*(*x*) := (x *+* 1) log(*x* + 1) - *x* log *x* for *x >* 0 and g(0) = 0. Moreover, f is defined by $f \left(x\right) : = \frac{x + 1}{2} log \frac{x + 1}{2} - \frac{x - 1}{2} log \frac{x - 1}{2}$ for x > 1, *f*(1) = 0

As mentioned above, the present disclosure may be particularly useful and may achieve a quantum advantage for very low energies, i.e., E ≈ 0. Based on this assumption, the error exponents above may be reformulated as $D \left({ρ}_{E}^{\left(K\right)}, {ρ}_{E}^{⊗ K}\right) \geq K ⋅ ln \left(K\right) ⋅ E + O \left({E}^{2}\right)$ $D \left({p}_{E}^{\left(K\right)}\left‖{p}_{E}^{⊗ K}\right.\right) = \frac{\left(K-1\right) ⋅ K}{ln \left(4\right)} ⋅ {E}^{2} + O \left({E}^{3}\right)$ $D \left({{p}^{˜}}_{E}^{\left(K\right)}\left‖{{p}^{˜}}_{E}^{⊗ K}\right.\right) = \frac{2 \left(K-1\right) ⋅ K}{ln \left(2\right)} ⋅ {E}^{2} + O \left({E}^{3}\right)$

The quantum advantage of the principles of the principles of the present disclosure may be made explicit by observing that: ${lim}_{E \to 0} D \left({ρ}_{E}^{\left(K\right)}, {ρ}_{E}^{⊗ K}\right) / D \left({p}_{E}^{\left(K\right)}\left‖{p}_{E}^{⊗ K}\right.\right) = ∞$ ${lim}_{E \to 0} D \left({ρ}_{E}^{\left(K\right)}, {ρ}_{E}^{⊗ K}\right) / D \left({{p}^{˜}}_{E}^{\left(K\right)}\left‖{{p}^{˜}}_{E}^{⊗}\right.\right) = ∞$

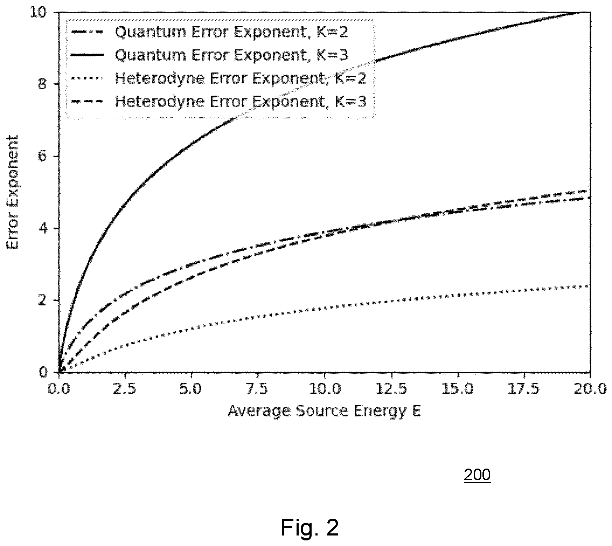

Fig. 2 depicts a diagram 200 for demonstrating the quantum advantage discussed above. For the case of two detectors, using the approach described herein ("Quantum Error Exponent, K=2 in Fig. 2), the error exponent is greater than for the case of two detectors using the classical approach ("Heterodyne Error Exponent, K=2" in Fig. 2). Moreover, for low energies, the quantum case for two detection even results in a higher error exponent than the three detector classical case ("Heterodyne Error Exponent, K=3"). The Quantum Error Exponent for three detectors (K=3) results in a much higher error exponent for all energies.

When using a Hadamard interferometer (e.g., based on a photonic processor as discussed herein) followed by photon counting, the error exponent may be expressed as: ${D}_{PH} = K ⋅ ln \left(K\right) ⋅ E + O \left({E}^{2}\right)$

This may be proved as follows: Given an incident field |α〉〈α|^{⊗*K*}, an (optical) Hadamard transformation may transform it to $\left|\sqrt{K}α\right〉 \left〈\sqrt{K}α\right| ⊗ \left|0\right〉 {\left〈0\right|}^{⊗ \left(K-1\right)}$. Applying a Positive Operator Valued Measure (POVM) {Π_{*b*_{K}}}_{b_{K} ∈{0,1}_{K}} where ${Π}_{{b}^{K}} : = {⊗}_{i = 1}^{K} {Π}_{{b}_{i}}$ with Π₀ := |0〉〈0| and ${Π}_{1} : = 1 - {Π}_{0}$. This may yield a distribution *p*_{(1+K·E)₋₁} ⊗ *p*₁^{⊗(*K*-1)} when the correlated source is present and ${p}_{\left(1+E\right)}^{⊗ K} - 1$ when the uncorrelated source is present, where *pₓ*(*0*) := *x.* Calculation of relative entropy $\left.D\left({p}_{\left(1+KE\right)}\right)-1⊗{p}_{1}^{⊗ \left(K-1\right)}\left‖{p}_{{\left(1+E\right)}^{- 1}}^{⊗ K}\right.\right)$ and Taylor expansion yield above result.

Implementing a POVM may correspond to placing a single-photon detector at an output (or each or a subset of outputs) of the interferometer, such that very weak fields/intensities may be detected. Sampling photon counts of the single-photon detectors over time may correspond to yielding the distributions relating to the correlated or uncorrelated source mentioned above. For example, a difference of respective signals of the photodiodes may result in a mean value of a phase space projection, but the present disclosure is not limited in that regard. As mentioned herein, instead of single-photon detection, homodyne or heterodyne detection may be carried out.

In general terms, given a set of detectors, their correlation may be tested to distinguish if there is only thermal noise or some low intensity signal. The principles of the present disclosure may be implemented in various ways. For example, the following elements may be used for implementing the principles of the present disclosure:
- A coupling mechanism, that allows incoming light to be coupled into a tunable chip (e.g., photonic processor)
- The tunable chip capable of general linear optical transformations on the incoming light and that can be tuned in real time or near real time.
- A set of detectors to transform the processed optical signal into an electronic signal, which may be used to make a decision according to a rule or predetermined logic
- A processing rule or predetermined logic for measurement data of the set of detector, that decides what calibration to do on the optical processor, when to stop the protocol and what decision to make.

Coupling mechanisms may vary depending on the medium in which the signal is transmitted. For example, signals may be coupled from free space to optical. If the signal is already traveling through fiber, it may be coupled into chip through fiber arrays. If the signal is traveling through air, a fiber launch system may be used. Fiber launch systems may include a stabilization system, a focusing lens, a bare fiber end or fiber connector such as an FC/PC connector, or the like. Such systems may also include an adjusting mechanism for the lens or the input beam. Coupling from free space to fiber may be implemented regardless of whether the fiber is multi-mode, single-mode or polarization-maintaining, but depending on the type of fiber the process may be different. The present disclosure is not limited to any type of fiber, as different applications may have different requirements. In case that the optical processing requires a different wavelength for the incoming light, frequency conversion may be performed. Frequency conversion may be performed using non-linear optical phenomena, such as optical parametric oscillation (OPO), optical parametric amplification (OPA) and difference frequency generation (DFG), or the like.

Tunable chips, such as photonic processors may allow a user to tune phase and intensity of incoming signals, in order to create constructive interference if they are correlated. The chip may be based on any material, depending on the circumstances, such as Si₃N₄, and may include a set of thermo-optical tunable elements arranged in a universal square interferometer. The amount of elements may depend on an amount of modes that can be manipulated on the device. The tunable elements may be integrated in cells, which may include a tunable beam splitter, a tunable phase shifter, and the like. The chip may have peripheral system that includes a cooling module, an electronic control system, and the like. The control system may be on a feedback loop with detectors to calibrate the interferometers in real time.

The detectors may need to be able to work at low intensities. Such operation may require a photon detector that has low dark counts, such as superconducting nanowire single-photon detectors (SNSPDs - dark counts in the order of 10Hz).

In the following, the principles of the present disclosure are described with respect to a Hadamard interferometer that is implemented by a photonic processor, but the present disclosure is not limited in that regard since the principles of the present disclosure may be applicable to any type of detectors and sensors.

A photonic processor may use light (i.e., photons) instead of electrical signals (electrons) to process data. It may include optical components such as waveguides, lasers, photodetectors, interferometers (e.g., Mach-Zehnder interferometer), phase-shifters, and the like, to manipulate input light for computing tasks.

In general terms, a photonic processors (such as an optical photonic processor which may use optical light) may relate to an (integrated) optical device capable of performing quantum and classical operations. For example, quantum optical operations may include one or more of single-qubit gate operations at network nodes, superposition and interference of photons and weak laser beams, routing and switching of quantum optical states in fiber networks, specialized detection schemes utilizing the phase correlation of individual photons, or the like. It should be noted that the present disclosure is not limited to optical light. Any light of any wavelength may be used for implementing the principles of the present disclosure, such as radio waves and thermal radiation waves (as long as the wavelength the radiation fits tot eh waveguides of the photonic processor). For example, the present disclosure may be applied in astronomy (or astrophysics) where radio telescopes receive radio waves and forward them to a photonic processor. In astronomy (or astrophysics), thermal radiation waves may also be used. The present disclosure may further be applied to detect antennas (such as used for surveillance) in which case radio waves or microwaves may be detected. The present disclosure may further be applied for military, defense, or aviation applications. For example, an aircraft or a missile may emit thermal radiation waves which might be detected according to the present disclosure. In general, the present disclosure may be applied when low light intensities (of any wavelength) should be detected and a decision may need to be taken whether the low light intensities derive from a correlated source. In other words, sensing of weak electromagnetic radio sources or thermal radiation sources, e.g., tiny reflections by radio antennas, small deviations in thermal radiation or the detection radar reflections caused by stealth military aircraft may be of special interest by different user groups, for example: metrology by scientists, military use cases or spy detection.

There may be a single (correlated) source or multiple correlated sources that emit coherent light with small intensities. By bringing the light to constructive interference, the principles of the present disclosure may be applied. The present disclosure makes use of the quantum mechanical properties of weak electromagnetic radiation in conjunction with a radiation detection scheme to achieve an exponential increase in detection efficiency for weak (low intensity) electromagnetic radiation.

A photonic processor may carry out a Hadamard transformation. The Hadamard transformation may refer to a linear, orthogonal transformation that maps a vector to another vector through a Hadamard matrix. It may be used in quantum computing and signal processing to create superpositions or to simplify certain computations by converting between time and frequency domains or between different representations in space. For example, a number of K different modes (in space) may be combined to one (bright) mode (in space) and K-1 vacuum modes (in space). The transformation may apply an operation similar to a Fourier transform but using real values instead of complex values, making it computationally efficient. Returning to Fig. 1, the method 100 includes receiving, 110, data indicating, for an output of the photonic processor, a characteristic of the coherent light, the coherent light entering the photonic processor at at least two inputs.

The photonic processor may have multiple inputs and multiple outputs. The inputs may be connected to the outputs via photonic fibers through which the light is transmitted. The path of the light through the photonic processor may be determined by optical elements, such as interferometers, beam-splitters, mirrors, and the like, which may interconnect the different photonic fibers. Thereby, light of one input may be superimposed with light of another input such that they interfere. Thereby, the light entering two inputs may be routed to one output. Interference of light may relate to a phenomenon that occurs when two or more coherent light waves overlap, leading to a redistribution of their intensities due to their phase relationships. When the waves are in phase, they constructively interfere, resulting in an increased intensity. When they are out of phase, they destructively interfere, leading to reduced or zero intensity.

The characteristic may relate to any measure that indicates whether a resulting distribution corresponds to the correlated case (i.e., coherent light is present) or to the uncorrelated case. For example, the characteristic includes at least one of an amplitude, an intensity, a power, a photon number, and a interference measure (e.g., a measure that is indicative of constructive interference). For example, the characteristic may be determined based on photon counts of single photon detectors, or the like. Single-photon detectors (SPDs) relate to highly sensitive devices for detecting individual photons, enabling measurements at low light levels. They may operate based on various physical principles, such as avalanche multiplication in semiconductors, superconducting transitions, or photomultiplier effects. Common types of SPDs include avalanche photodiodes (APDs), SNSPDs, and photomultiplier tubes (PMTs). As mentioned above, instead of single photon detection, homodyne or heterodyne detection may be carried out based on at least one photodiode and a reference laser.

The method 100 further includes generating, 120, a control signal for adjusting at least one parameter relating to the photonic processor such that the coherent light of the at least two inputs interferes in a way to increase the characteristic at the output.

As discussed above, in the photonic processor, the light of two inputs may be superimposed and brought to interference. The parameter relating to the photonic processor may include any configuration of the photonic such that constructive interference is achieved at the output. For example, a phase-shifter may be controlled such that the phase of the light of at least one input is shifted to be in phase with the light of the other input. Additionally or alternatively, an interferometer (e.g., MZI) may be controlled to adapt a path of the light, based on which the light of the two inputs may be in phase. Even if the light comes from a single source, at the at least two inputs, path differences may be present and therefore, it may be necessary to compensate for these path differences. Furthermore, a beam splitter and/or a mirror may be controlled to reroute the light of the at least two inputs to arrive at the same output. It should be noted that output is intended to be understood broadly as any part of the photonic processor in which the separate modes (or photons) are not combined anymore and thus, the output is not limited to the case that it exactly corresponds to the outlet of the photonic processor. It may be sufficient that constructive interference is achieved at any point. Then, at the outlet, the characteristic may be measured, either directly or indirectly. For example, instead of measuring a maximum, the outgoing signal may be controlled to be zero at the outlet (or wherever the photon detector is placed, i.e., behind the photonic processor).

The method 100 further includes determining, 130, the presence of the coherent light based on an analysis of the increased characteristic at the output. As indicated above, when the light of the two inputs is correlated (and thus, is based on a coherent light source), it may follow a certain statistic, and if it is not correlated, it may follow a different statistic. Thus, the analysis of the increased characteristic may include determining which statistic the characteristic follows or in other words, the analysis of the increased characteristic includes determining whether the characteristic follows a predetermined statistical distribution.

For example, it may be determined that coherent light is present when the statistical distribution follows *p*_{*(1+K·E*)₋₁} ⊗ p₁^{⊗(K-1)}, and ${p}_{{\left(1+E\right)}^{- 1}}^{⊗ K}$ when the coherent light is not present (or uncorrelated source is present), where *pₓ*(0) := *x,* as mentioned above.

Given n readings *b^{K}_{1,}..., b^{K}ₙ* of the K detectors, for determining whether the coherent light is present, the method may further include:
1. Assuming a threshold parameter *ε*
2. Computing the empirical distribution p of the photon detection events from *b^{K}₁,..b^{K}*ₙ
3. If ∥ *p* - *p*₀ ⊗ *p₁* ⊗ ...⊗ *p₁* ∥ < *ε* where *pₓ* is the distribution defined above, decide the sources are correlated
4. Else decide they are not correlated (e.g., only thermal noise is present)

For carrying out the analysis and determining whether the characteristic follows the predetermined distribution, different approaches may be taken, such as determining an empirical distribution, carrying out at least one of a maximum-likelihood decision, carrying out a sequential hypothesis testing, or the like.

An empirical distribution of the characteristic (or of measurement values relating to the characteristic) may be carried out. In such an example, a number of measurements is performed and used to estimate pₙ (the probability of obtaining each outcome of the measurement). Then, the compared estimated distribution may be compared to the ideal uncorrelated distribution (or the correlated distribution), e.g., based on Euclidean distance, relative entropy, or the like. There may be a predetermined value for Euclidian distance that may be considered uncorrelated. If the value of the distance is larger, then light may be correlated.

A maximum likelihood decision may be based on a set of measurement data of fixed size. A probability may be computed for obtaining such a data set from each possible input distribution (uncorrelated thermal light and correlated input light). The characteristic may then correspond to the input distribution with the highest probability of generating such measurement data.

In sequential hypothesis testing, by fixing the type-I and type-II error, one can calculate a decision region for stopping the data collection and making a measurement without exceeding the previously fixed errors.

The present disclosure is not limited to the case that two inputs are routed to one output. In order to obtain a further increased characteristic at the output, light of as many inputs as possible may be used. For example, if four inputs are used, the light of four inputs may be brought to interfere at the output, or if eight inputs are used, the light of the eight inputs may be brought to interfere at the output. There may be various ways how this may be achieved. In the following example, light of respective two inputs is first brought to interfere pairwise at one respective output, and then, the light of all inputs is routed to one common output. For example, if four inputs are used (even if the photonic processor has more inputs), light of two first inputs may be routed to one first output, and light of two second inputs may be routed to one second output. When constructive interference is achieved at the first and the second output, the light of the four inputs may be routed to either one of the first or the second output. In another example, if three inputs are used (even if the photonic processor has more inputs), light of two first inputs may be routed to one first output, and light of the other input (as one second input) may then be adjusted to constructively interfere with the light at the first output. In more general terms, the present disclosure is not limited to using an even number of inputs.

In more general terms, in some examples, the at least two inputs are at least two first inputs and the method further includes receiving data indicating, for a second output (or at least one second output) of the photonic processor, the characteristic of the coherent light, the coherent light entering the photonic processor at at least two second inputs, as discussed above.

The method may then further include generating a control signal for adjusting at least one further parameter relating to the photonic processor such that the coherent light of the at least two second inputs interfere in a way to increase the characteristic at the second output. The further parameter may be similar to the parameter discussed above, e.g., a configuration of a (further) phase-shifter, a (further) interferometer, a (further) mirror or beamsplitter, or the like.

The method may then further include, when the characteristic at the second output is increased to a predetermined value, generating a control signal for adjusting at least one further parameter relating to the photonic processor such that the coherent light entering the photonic processor at the at least two further inputs are rerouted to the first output for further increasing the characteristic at the first output. In this case, the further parameter may again relate to an element of the photonic processor (i.e., phase-shifter, interferometer, mirror, beamsplitter, or the like) to reroute the light of the two second inputs to the first output and to cause constructive interference at the first output.

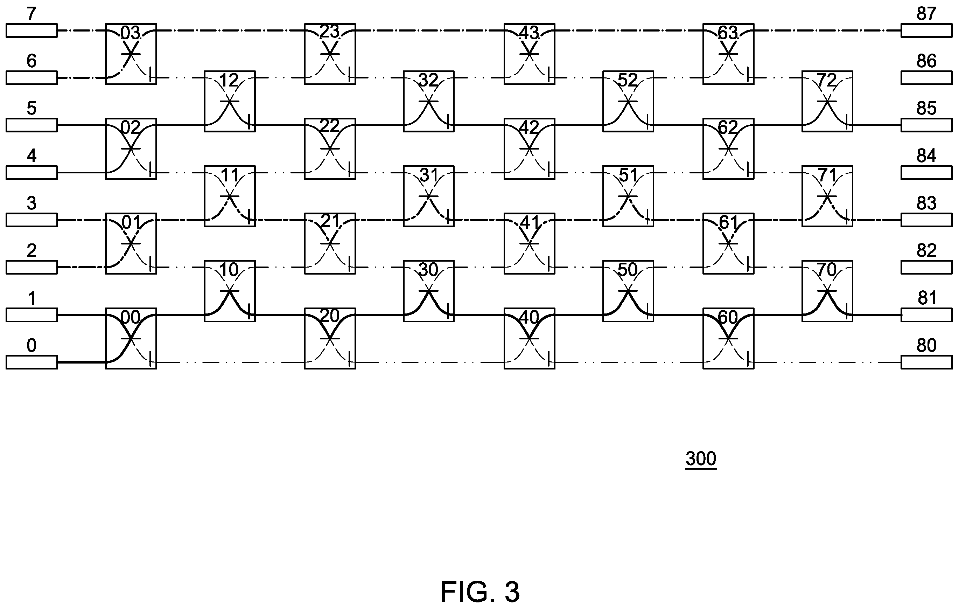

Such a calibration process is discussed in the following under reference of Figs. 3 to 5 depicting an example of a photonic processor 300. The photonic processor 300 includes eight inputs 0 to 7 and eight outputs 80 to 87. Moreover, the photonic processor 300 includes a plurality of Mach-Zehnder interferometers (MZI) 00 to 72 (each column of interferometers has an own first digit, i.e., the first column has the digit 0, the second column has the digit 1, and so on) between the inputs and the outputs.

The MZIs may include beam splitters (couplers), such as directional couplers or multimode interference (MMI) splitters configured to divide incoming light into two paths. The MZIs may further include phase shifters, e.g., electro-optic, thermo-optic, or carrier-injection-based phase shifters to control the phase difference between the two modes. The MZIs may further include an interference region for recombining two modes at a second beam splitter, where interference may occur. The MZIs may further include waveguides based on silicon, silicon nitride, indium phosphide, or the like to guide the light through the MZI. In the photonic processor 300, the MZIs function as tunable optical switches, modulators, and beam splitters for carrying out the principles of the present disclosure.

As indicates above, the calibration process may be done by sequentially changing the values of a subset of tunable cells while measuring the output. Following an algorithm similar to gradient descent (gradient ascent in this case), the cells may be tuned in a specific starting value (e.g., the transmittivity of the first row of beamsplitters is set to 1/2), which produces interference on the incoming light for pairs of two incoming modes. After measuring, a slight change in the phase shifter and/or splitting radio of each first cell is made (change phase by a value b of the second mode) and another measurement is made. If intensity in the first output mode increased, change phase and/or splitting ratio again by b and if it decreased change by -b. If changing by -b also decreases intensity, it may be conclude that (maximized) constructive interference is present with the given accuracy. If not, it may be changed by b or -b until both lead to a reduction of output energy. Different values of b may yield different calibration accuracies. Increased accuracies may be achieved with lower values of b. One may also use adaptive values that change depending on the amount of iterations. Once the process terminates for all pairs of modes (i.e., where intensity is maximized at the respective output), these pairs are made to interfere at the first output and the transmittivity of the third layer of beamsplitters may be set their starting value (e.g., to 1/2). The same calibration process may be done for groups of four modes, using the information of the previous step to ensure constructive interference between pairs of modes. In this case, the phase shifting value of MZI 12 and 10 is changed in discrete steps while trying to maximize (with the given accuracy) output energy in modes 1 and 5. It should be noted that one or multiple measurements may be carried out for determining whether to increase or decrease by b (or -b). A number of measurements may depend on the circumstance. For example, multiple measurements may be carried out to decrease statistical variance. It should also be noted that a modes and inputs may be used synonymously.

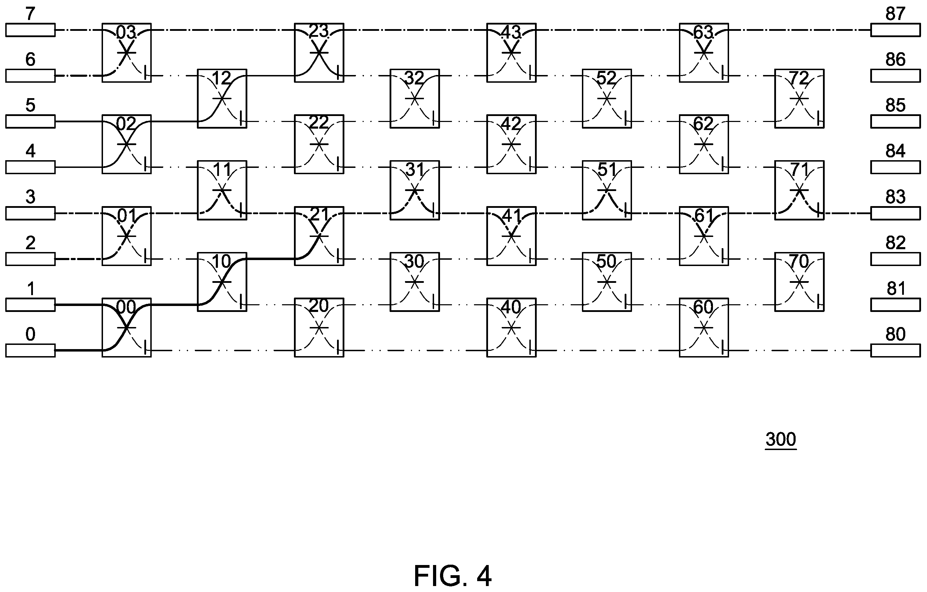

As a first step, constructive interference between pairs of modes may be achieved, as discussed above. As depicted in Fig. 3, constructive interference may be achieved for the pairs of inputs 0 and 1, 2 and 3, 4 and 5, 6 and 7. Thus, signals on outputs 80, 82, 84 and 86 are cancelled (in an ideal case). On the other hand, the energy is maximized (with the given accuracy) on odd outputs 81, 83, 85, and 87. In this example, this is achieved by tuning the phase-shifters in the first cell/column (cells labeled 0x), but any other phase-shifters may be tuned as well, as long as this leads to maximizing the energy at the respective outputs (with the given accuracy). Thereby, the relative phase between pairs of modes may be determined and can be adjusted accordingly. This is depicted in Fig. 4.

Fig. 4 depicts the second calibration step. In this example, beamsplitters in cells 11 and 12 are adjusted to send all intensity towards the top mode (for modes 4 to 7 towards output 87 and for modes 0 to 3 towards output 83). Moreover, phase-shifters of cells 10 and 12 are adjusted to cause constructive interference, as discussed above. Thereby, output energy is maximized at outputs 83 and 87 (with the given accuracy).

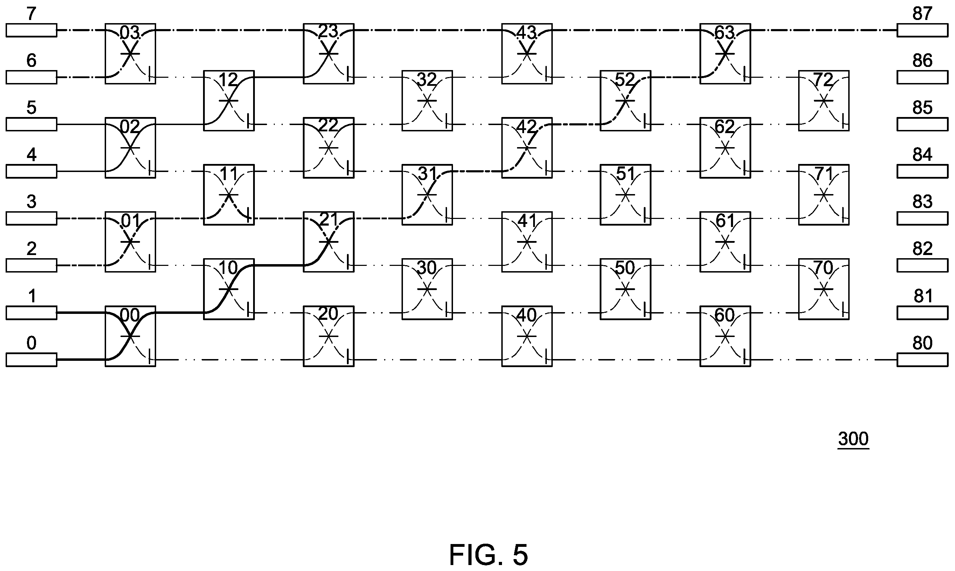

Fig. 5 depicts the third calibration step. In this example, beamsplitters in cells 31, 42 and 52 are set to send all incoming photons towards 63. By controlling the phase shifters of 31, the strategy discussed above is applied again to maximize (with the given accuracy) the energy at output 87 (but any other output may be chosen as well).

In more general terms, the method further includes, when the characteristic at the second output is increased to the predetermined value, generating a control signal for adjusting at least one further parameter relating to the photonic processor such that the coherent light of the at least two first inputs and the coherent light of the at least two second inputs interfere in a way to increase the characteristic at the first output.

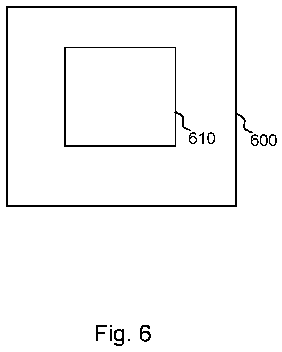

Fig. 6 depicts an apparatus 600 for detecting presence of correlated electromagnetic waves using a photonic processor. The apparatus 600 includes processing circuitry 610 configured to carry out any one of the methods discussed herein. The processing circuitry 610 may be based on "classical" electronic hardware, such as one or more hardware components configured to execute operations on data, signals, instructions, or the like. For example, the processing circuitry 610 may be a single dedicated processor, a single shared processor, or a plurality of individual processors, some of which or all of which may be shared, a digital signal processor (DSP) hardware, an application specific integrated circuit (ASIC), a system-on-a-chip (SoC), a neuromorphic processor, a field programmable gate array (FPGA), or the like. The processing circuitry 610 may optionally be coupled to, e.g., memory such as read only memory (ROM) for storing software, random access memory (RAM) and/or non-volatile memory. For example, the apparatus 600 may include memory configured to store instructions, which when executed by the processing circuitry 610, cause the processing circuitry 310 to perform the steps and methods described herein. However, the present disclosure is not limited in that regard as also advanced processing systems, such as quantum processors, photonic processors, or the like, also in combination with classical electronic hardware, may be used as the processing circuitry 610.

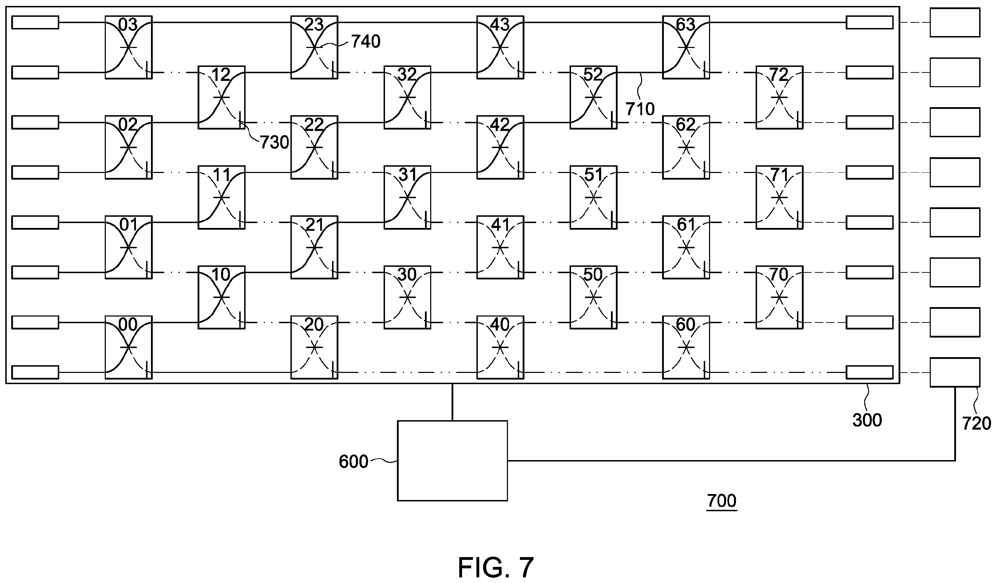

Fig. 7 depicts a system 700 for detecting presence of correlated electromagnetic waves using the photonic processor 300. The system 700 includes the apparatus 600 and the photonic processor 300, the photonic processor comprising. The photonic processor 300 includes a plurality of photonic fibers 710 for routing the coherent light from respective inputs to respective outputs, as discussed above. The photonic processor 300 further includes a plurality of single photon detectors 720 at each output. However, the single photon detectors 720 are not necessarily part of the photonic processor 300 and may be provided separately. The photonic processor 300 further includes a plurality of adjustable phase-shifters 730 (in the MZIs, in this example) for adjusting the phase according to a predetermined logic (i.e., to bring the light of one input to interfere with light of another input). The photonic processor 300 further includes a plurality of beamsplitters 740 (in this MZls, in this example) for routing the coherent light to the output, as discussed herein.

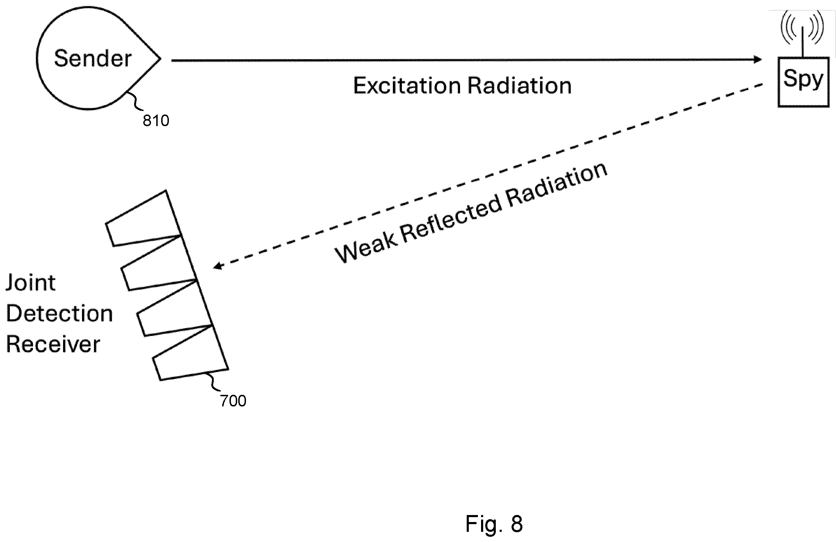

Fig. 8 depicts an application of such a system 700. In this example, a transmission antenna (sender) 810 (which may be part of the system or which may be separate) emits coherent light as excitation radiation intended to excite a nearby antenna, which is assumed to be included in a spy device (a listening device). If the antenna is nearby and is thus excited (due to its gain) by the radiation, it may reflect the coherent light, but may weaken it. The weakened reflected radiation may then be detected by the photonic processor 300 of system 700 and the principles of the present disclosure may be applied. If a spy antenna is present, coherent light may be detected and if not, it may not be detected.

Moreover, wiretap codes may be used to secure MIMO mobile, radio links, high altitude platform or laser satellite links. Applying the principles of the present disclosure be used to discover spies or illegitimate receivers next to a legitimate user. Physical radiation beam parameters or wiretap code parameters may be changed or improved instantaneously to cope with the actual scenario and to ensure the semantic security of the communication link.

Moreover, radar detection of stealth military aircraft may be carried out according to the present disclosure. Although stealth technology reduces the reflection of radar beams to a minimum, reflections cannot be completely removed. Remainders may be uncovered by applying the principles of the present disclosure, thereby unveiling stealth aircraft. In this scenario, the radiation frequency may use longer wavelengths than in the examples above, thus requiring larger devices and integration into radar surveillance stations, but the principal setup may be the same as in Fig. 8.

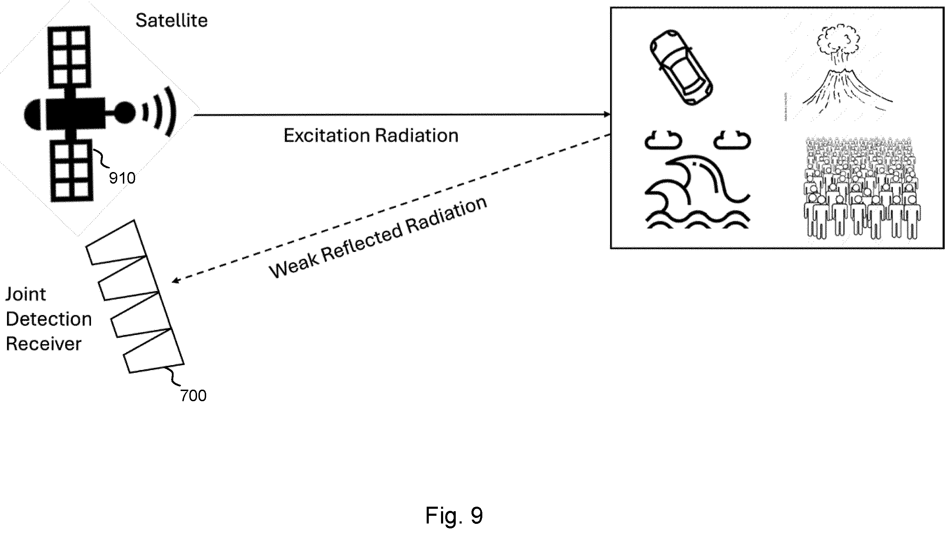

Fig. 9 depicts another application of the system 700 in conjunction with a satellite 910. The satellite 910 may be part of the system 700 or may be separate. The satellite 910 may emit excitation radiation onto a planet (e.g., the earth) and weak reflected radiation may be input into the photonic processor 300 of the system 700. Thereby, objects may be detected and resolution of such satellites may be increased. Also, antennas of the observed planet may be excited by radiation pulses sent to the ground. Thereby, it may be possible to detect mobile devices and hence, people, sensors, base stations, or the like). Moreover, reflections from metallic surfaces (e.g., cars) may be detected. A passive satellite system may detect small variations of thermal radiation e.g., from water surface, tectonic activity, or the like.

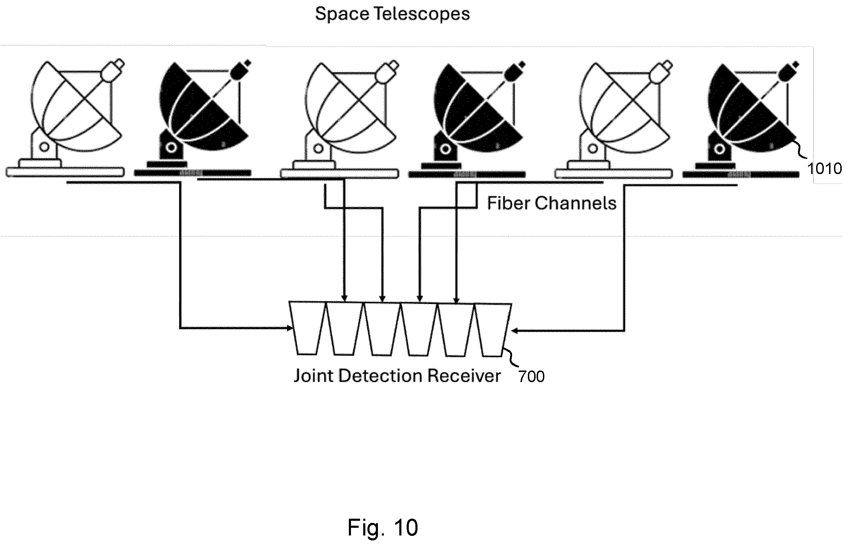

Fig. 10 depicts another application of the system 700 in conjunction with radio telescopes 1010. The radio telescopes 1010 may be part of the system 700 or may be separate The radio telescopes 1010 may be connected with fiber channels to the photonic processor 300 of the system 700 and space radiation may be transmitted, from the radio telescopes 1010 to the photonic processor 300. Thereby, accuracy and resolution may be increased. Since modern telescopes already use adaptive optics and pairing/superposition of their antenna signals to increase optical resolution and stability of their space imagining, their signals may be forwarded to the photonic processor 300. Thereby, a quantum enhanced coherent detection method for extremely weak and quasi thermal space signals may be provided.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (100) for detecting presence of coherent light using a photonic processor (300), the method comprising:
receiving (110) data indicating, for an output (87) of the photonic processor (300), a characteristic of the coherent light, the coherent light entering the photonic processor (300) at at least two inputs;
generating (120) a control signal for adjusting at least one parameter relating to the photonic processor (300) such that the coherent light of the at least two inputs (6, 7) interferes in a way to increase the characteristic at the output (87);
determining (130) the presence of the coherent light based on an analysis of the increased characteristic at the output (87).

2. The method (100) of claim 1, wherein the interfering at the output (87) is further caused by routing, using at least one beamsplitter (740) and at least one phase-shifter (730), the coherent light of the at least two inputs (6, 7) to the output (87).

3. The method (100) of claim 1, wherein the characteristic includes at least one of an amplitude, an intensity, a power, a photon number, and a interference measure.

4. The method (100) of any one of claims 1 to 3, wherein the output (87) is a first output (87), and wherein the at least two inputs (6, 7) are at least two first inputs (6, 7), the method (100) further comprising:
receiving data indicating, for a second output (86) of the photonic processor (300), the characteristic of the coherent light, the coherent light entering the photonic processor (300) at at least two second inputs (4, 5); and
generating a control signal for adjusting at least one further parameter relating to the photonic processor (300) such that the coherent light of the at least two second inputs (4, 5) interfere in a way to increase the characteristic at the second output (86); and
when the characteristic at the second output (86) is increased to a predetermined value, generating a control signal for adjusting at least one further parameter relating to the photonic processor (300) such that the coherent light entering the photonic processor (300) at the at least two further inputs (4, 5) are rerouted to the first output (87) for further increasing the characteristic at the first output (87).

5. The method (100) of claim 4, further comprising:
when the characteristic at the second output (86) is increased to the predetermined value, generating a control signal for adjusting at least one further parameter relating to the photonic processor (300) such that the coherent light of the at least two first inputs (6, 7) and the coherent light of the at least two second inputs (4 ,5) interfere in a way to increase the characteristic at the first output (87).

6. The method (100) of any one of claims 1 to 5, wherein the analysis of the increased characteristic comprises determining whether the characteristic follows a predetermined statistical distribution.

7. The method (100) of any one of claims 1 to 6, wherein the analysis is based on at least one of a determination of an empirical distribution of the characteristic, a maximum likelihood decision, and a sequential hypothesis testing.

8. The method (100) of any one of claims 1 to 7, wherein the coherent light is based on one of radio waves and thermal radiation waves.

9. A computer program comprising instructions which, when the program is carried out on a computer, causes the computer to carry out the method (100) of any one of claims 1 to 8.

10. An apparatus (600) for detecting presence of coherent light using a photonic processor (300), the apparatus (600) comprising processing circuitry (610) configured to carry out the method of any one of claims 1 to 8.

11. A system (700) for detecting presence of coherent light using a photonic processor (300), the system (700) comprising:
the apparatus (600) of claim 10; and
a photonic processor (300), the photonic processor (300) comprising:
a plurality of photonic fibers (710) for routing the coherent light from respective inputs (0-7) to respective outputs (80-87);
at least one photon detector (720) at the output (87) for detecting the characteristic; and
at least one adjustable phase-shifter (730) for adjusting the phase according to a predetermined logic; and
at least one beamsplitter (740) for routing the coherent light of the at least two inputs (5, 6) onto the output (87).

12. The system (700) of claim 11, further comprising:
a transmission antenna (810) configured to emit the coherent light,
wherein the coherent light is a reflection of the emitted coherent light.

13. The system (700) of claim 12, wherein the target is a further antenna that is excited by the coherent light, and wherein the detection of the presence of the coherent light corresponds to a detection of presence of the further antenna.

14. The system (700) of claim 11 or 12, further comprising at least one satellite (910).

15. The system (700) of claim 11 or 12, further comprising at least one radio telescope (1010).
